(19) Europäisches Patentamt
European Patent Office
Office européen des brevets

(11) **EP 3 822 870 A1**

(12) **EUROPEAN PATENT APPLICATION**

(43) Date of publication:
**19.05.2021 Bulletin 2021/20**

(51) Int Cl.:
***G06N 10/00*** (2019.01)  ***G06N 5/00*** (2006.01)

(21) Application number: **19209830.9**

(22) Date of filing: **18.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **River Lane Research Ltd.
Cambridge, Cambridgeshire CB2 3BZ (GB)**

(72) Inventors:
• **Crawford, Ophelia
Cambridge, CB3 0HN (GB)**
• **Campbell, Earl
Sheffield, S10 4FN (GB)**

(74) Representative: **Potter Clarkson
The Belgrave Centre
Talbot Street
Nottingham NG1 5GG (GB)**

(54) **ESTIMATING QUANTUM OBSERVABLES**

(57)    A method of operating a quantum computer using a classical computer in order to estimate a value of an observable for a physical system represented by a quantum operator $H = \sum_i c_i P_i$, wherein $P_i$ are Pauli operators and $c_i$ are real coefficients, the method comprising: with a state $|\Psi(\phi,\theta)\rangle = U_1(\phi)U_2(\theta)|\psi_0\rangle$, wherein $U_2(\theta)$ is a unitary operator, $U_1(\phi)$ is a fermionic linear unitary operator, and $|\psi_0\rangle$ is an initial quantum state that can be prepared on the quantum computer, performing the following steps for one or more values of $\theta$: controlling the quantum computer to obtain one or more measurement values of a state $|\Psi(0,\theta)\rangle = U_2(\theta)|\psi_0\rangle$ for one or more operators $P_i$; and, calculating, on the classical computer, one or more estimators of $\langle\Psi(0,\theta)|P_i|\Psi(0,\theta)\rangle$ using the obtained measurement values, wherein each of the one or more estimators is associated with one of the one or more operators $P_i$; and, for at least one of the one or more values of $\theta$, using at least one of the one or more estimators to calculate, on the classical computer, an estimated expectation value associated with the state $|\Psi(\phi,\theta)\rangle$.

FIG. 6

600

Determine form of ansatz state
$|\Psi(\phi,\theta)\rangle = U_1(\phi)U_2(\theta)|\psi_0\rangle$.    601

Obtain estimates of energy
expectation values $E(\phi^i, \theta^j) = \langle\Psi(\phi^i,\theta^j)|H_q|\Psi(\phi^i,\theta^j)\rangle$.    602

Select lowest value of $E(\phi^i, \theta^j)$ as
estimate of ground state energy.    603

**Description**

**BACKGROUND**

In quantum mechanics, possible values of observables correspond to eigenvalues of linear operators. An example of an observable is the energy of a quantum system, and its corresponding operator is the Hamiltonian. The lowest eigenvalue of a Hamiltonian is known as the ground state energy, and higher eigenvalues are known as excited state energies. Knowledge of the ground state and excited state energies of a quantum system has many potential applications, such as in catalyst development and drug discovery.

It is known that it is possible to obtain an estimate for the smallest value of an observable, such as the ground state energy of a physical system, by using a quantum computer to calculate operator expectation values for a number of quantum states and selecting the minimum of the calculated values. One such method is disclosed in A Peruzzo et al. "A variational eigenvalue solver on a photonic quantum processor", Nat Commun 5, 4213 (2014) doi:10.1038/ncomms5213, which is hereby incorporated by reference. Higher eigenvalues (corresponding to, for example, excited state energies) can be found using simple extensions.

Obtaining an expectation value of the Hamiltonian or an operator corresponding to another observable for a single quantum state requires measuring the state using multiple different measurement operators, and these measurements must be repeated for each measurement operator in order to obtain an accurate expectation estimate. As quantum measurements are destructive, the quantum state cannot be reused, so each measurement therefore requires the state to be freshly prepared on the quantum computer. This is generally performed by preparing some easy to prepare initial state and performing one or more quantum operations to obtain the state in question.

Operations performed on a quantum computer are costly in terms of both the time and physical resources that are required. State of the art universal quantum computers are currently only capable of operating with less than 100 qubits, and qubit numbers are likely to be relatively small for the foreseeable future. In addition, the relatively high error rates associated with current quantum devices requires the use of fault-tolerant schemes to encode qubits, thereby adding additional overhead and further restricting the ability to perform useful quantum computations.

Moreover, although quantum computers may be capable of solving some problems that are intractable on a classical computer, such as factoring large numbers using Shor's algorithm, the actual speed of operations on a quantum computer is relatively low compared to the speed of modern classical computers.

It is desirable to find methods that minimise the amount of processing performed on the quantum computer and perform as much of the processing as possible on the classical computer when obtaining approximate values for energies and other quantum observables.

An introduction to quantum computation is given in M A Nielsen and I L Chuang, "Quantum Computation and Quantum Information: 10th Anniversary Edition", 2010, which is hereby incorporated by reference.

**SUMMARY OF THE INVENTION**

According to a first aspect, there is provided a method of operating a quantum computer using a classical computer in order to estimate a value of an observable for a physical system represented by a quantum operator $H = \sum_i c_i P_i$, wherein $P_i$ are Pauli operators and $c_i$ are real coefficients, the method comprising: with a state $|\Psi(\phi,\theta)\rangle = U_1(\phi)U_2(\theta)|\psi_0\rangle$, wherein $U_2(\theta)$ is a unitary operator, $U_1(\phi)$ is a fermionic linear unitary operator, and $|\psi_0\rangle$ is an initial quantum state that can be prepared on the quantum computer, performing the following steps for one or more values of $\theta$: controlling the quantum computer to obtain one or more measurement values of a state $|\Psi(0,\theta)\rangle = U_2(\theta)|\psi_0\rangle$ for one or more operators $P_i$; and, calculating, on the classical computer, one or more estimators of $\langle\psi(0,\theta)|P_i|\Psi(0,\theta)\rangle$ using the obtained measurement values, wherein each of the one or more estimators is associated with one of the one or more operators $P_i$; and, for at least one of the one or more values of $\theta$, using at least one of the one or more estimators to calculate, on the classical computer, an estimated expectation value associated with the state $|\Psi(\phi,\theta)\rangle$.

This method allows estimates of operator expectation values of $H$ for multiple different quantum states with different values of $\phi$ to be determined using the measurements obtained from a single quantum state $|\Psi(0,\theta)\rangle$, thereby reducing the quantum resources required to obtain, for example, an estimate of the ground state energy, or a value of another observable.

The method operates the system in a different way to known methods in order to offload processing from the quantum computer to the classical computer. Quantum circuit depth is reduced and the number of parameters whose variation require computation on the quantum computer is reduced by $O(N^2)$, where $N$ is the number of spin orbitals. This typically leads to a smaller number of quantum state preparations.

The method reduces quantum computational resource usage even when calculating estimators of an expectation value for a single quantum state $|\Psi(\phi,\theta)\rangle$, as operations equivalent to $U_1(\phi)$ do not need to be performed on the quantum computer. The circuits that are run on the quantum computer are thus shorter, reducing the likelihood of an error occurring and therefore improving the effective error rate of the physical device.

$\phi$ and $\theta$ are parameters that describe the state $|\Psi(\phi,\theta)\rangle$. $|\psi_0\rangle$ is some easily prepared quantum state, such as the computational $|0\rangle$ state or the Hartree-Fock state.

The measured Pauli operators $P_i$ are not necessarily the same Pauli operators $P_i$ as those in the sum $H = \sum_i c_i P_i$. For example, some of the coefficients $c_i$ may be zero, but these Pauli operators may still be measured.

Preferably, controlling the quantum computer to obtain one or more measurement values of the state $|\Psi(0,\theta)\rangle = U_2(\theta)|\psi_0\rangle$ for one or more operators $P_i$ comprises performing the following steps on the quantum computer for each of the one or more operators $P_i$: preparing the initial quantum state $|\psi_0\rangle$; applying $U_2(\theta)$ to the initial quantum state to obtain the state $|\Psi(0,\theta)\rangle = U_2(\theta)|\psi_0\rangle$; performing a measurement of the operator $P_i$ on the state $|\Psi(0,\theta)\rangle$ to obtain a measurement outcome; and, outputting the obtained measurement outcome to the classical computer.

Preferably, using at least one of the one or more estimators to calculate the estimated expectation value associated with the state $|\Psi(\phi,\theta)\rangle$ comprises: calculating, on the classical computer, coefficients $c_i'(\phi)$, wherein $H =$

$$\sum_i c_i'(\phi) U_1(\phi) P_i U_1^\dagger(\phi) \; ; \quad \text{and, calculating, on the classical computer, an estimated expectation value}$$

$$E(\phi,\theta) = \sum_i c_i'(\phi) \langle \Psi(0,\theta)|P_i|\Psi(0,\theta)\rangle \quad \text{associated with the state } |\Psi(\phi,\theta)\rangle.$$

Optionally, the method may comprise calculating a plurality of estimated expectation values for a plurality of combinations of $\phi$ and $\theta$.

Optionally, the observable may be an energy.

Optionally, the quantum operator may be a Hamiltonian, and the method may further comprise determining, on the classical computer, the estimated ground state energy, wherein the estimated ground state energy is the minimum estimated expectation value of the Hamiltonian operator.

Alternatively, using at least one of the one or more estimators to calculate the estimated expectation value associated with the state $|\Psi(\phi,\theta)\rangle$ may comprise: calculating, on the classical computer, coefficients $\frac{\partial^n c_i'(\phi)}{\partial \phi_m^n}$, wherein

$$H = \sum_i c_i'(\phi) U_1(\phi) P_i U_1^\dagger(\phi) \; ; \quad \text{and, calculating, on the classical computer, an estimated expectation value}$$

$$\frac{\partial^n E(\phi,\theta)}{\partial \phi_m^n} = \sum_i \frac{\partial^n c_i'(\phi)}{\partial \phi_m^n} \langle \Psi(0,\theta)|P_i|\Psi(0,\theta)\rangle \quad \text{associated with the state } |\Psi(\phi,\theta)\rangle. \text{ Here } \phi_m \text{ is the mth } \phi \text{ parameter.}$$

According to a second aspect, there is provided a method of calculating a reduction in activation energy in catalyst development, comprising: determining one or more estimated expectation values using the method of the first aspect, wherein the quantum operator is a chemical Hamiltonian of a molecular system; and, using the one or more determined energy values to identify one or more points on a potential energy surface of the molecular system.

According to a third aspect, there is provided a method of simulating protein-molecule interaction, comprising: determining one or more estimated expectation values using the method of the first aspect, wherein the quantum operator is a chemical Hamiltonian of a molecular system; and, using the one or more determined energy values to identify one or more points on a potential energy surface of the molecular system.

According to a fourth aspect, there is provided a quantum computing system comprising: a classical computer comprising a classical processor and classical memory; and, a quantum computer comprising a quantum processor; wherein the classical computer is configured to perform the steps performed by the classical computer in the method of the first aspect, and wherein the quantum computer is configured to perform the steps performed by the quantum computer in the method of the first aspect.

According to a fifth aspect, there is provided a method of using the first aspect in one or more of catalyst development, drug discovery or materials development.

According to a sixth aspect, there is provided a method of operating a quantum computer using a classical computer in order to estimate a ground state energy of a physical system represented by a quantum operator $H = \sum_i c_i P_i$, wherein $P_i$ are Pauli operators and $c_i$ are real coefficients, the method comprising: with a state $|\Psi(\phi,\theta)\rangle = U_1(\phi)U_2(\theta)|\psi_0\rangle$, wherein $U_2(\theta)$ is a unitary operator, $U_1(\phi)$ is a fermionic linear unitary operator, and $|\psi_0\rangle$ is an initial quantum state that can be prepared on the quantum computer, performing the following steps for one or more values of $\theta$: controlling the quantum computer to obtain one or more measurement values of a state $|\Psi(0,\theta)\rangle = U_2(\theta)|\psi_0\rangle$ for one or more operators $P_i$; and, calculating, on the classical computer, one or more estimators of $\langle \Psi(0,\theta)|P_i|\Psi(0,\theta)\rangle$ using the obtained measurement values, wherein each of the one or more estimators is associated with one of the one or more operators $P_i$; for at least one of the one or more values of $\theta$ and for one or more values of $\phi$, using at least one of the one or more estimators to calculate, on the classical computer, an estimated energy expectation value associated with a state $|\Psi(\phi,\theta)\rangle$; and, determining, on the classical computer, the estimated ground state energy, wherein the estimated ground state energy is the minimum calculated estimated energy expectation value.

**BRIEF DESCRIPTION OF DRAWINGS**

Examples of the present invention will now be described in detail with reference to the accompanying drawings, in which:

Figure 1 illustrates a quantum computing system;
Figure 2 illustrates an existing method for obtaining estimates of expectation values of a quantum operator;
Figure 3 illustrates a method for obtaining estimates of expectation values of a quantum operator according to the present invention;
Figure 4 illustrates the quantum resources required to obtain estimates of expectation values of a quantum operator using the method of Figure 2;
Figure 5 illustrates an the quantum resources required to obtain estimates of expectation values of a quantum operator using the method of Figure 3; and,
Figure 6 illustrates an example method for obtaining a ground state energy of a quantum mechanical system using the method of Figure 3.

**DETAILED DESCRIPTION**

In quantum mechanics, possible values of observables correspond to eigenvalues of linear operators. An example of an observable is the energy of a quantum system, and its corresponding operator is the Hamiltonian. The lowest eigenvalue of a Hamiltonian is known as the ground state energy, and higher eigenvalues are known as excited state energies. Although the following description is given in reference to obtaining an estimate of the ground state energy of a chemical system, the methods described herein can also be used in estimating values of other quantum observables.

The ground state energy, $E_0$, of a quantum system is the lowest eigenvalue of the Hamiltonian, $H$, of the system and is given by the expectation value $E_0 = \langle \Psi_0 | H | \Psi_0 \rangle$, where $|\Psi_0\rangle$ is the ground state associated with the ground state energy.

Knowledge of the ground state energy and excited energy states is useful in numerous areas, including catalyst development, drug discovery and materials development.

For a given molecular geometry, the ground state energy of the Hamiltonian gives a point on the potential energy surface, which governs the behaviour of the chemical system. For example, a minimum on this surface corresponds to a stable configuration, while a saddle point may be a transition state along a reaction pathway. Knowledge of the potential energy surface, and therefore the ground state energy, can be used in catalyst development by calculating the reduction in activation energy, or in drug discovery through simulating protein-molecule interaction.

Similarly, the energies of excited states are useful for band gap calculations of potential battery materials and for studying photochemical reactions.

Additional uses of the ground state energy and excited state energies include optimisation problems such as task scheduling or searching for faults in a circuit.

It is known how to find an estimate for the ground state energy using the Variational Quantum Eigensolver (VQE) method disclosed in A Peruzzo et al. "A variational eigenvalue solver on a photonic quantum processor", Nat Commun 5, 4213 (2014) doi:10.1038/ncomms5213, which involves searching over the space of quantum states $|\Psi\rangle$ to find a minimum value $E = \langle \Psi | H | \Psi \rangle$ and selecting this as the estimate for the ground state energy.

In order to search the possible states $|\Psi\rangle$, it is typical to parameterise these states through choosing a so-called ansatz. The ansatz describes how the state $|\Psi(\Theta)\rangle$ should be constructed for a given set of parameters $\Theta$. The VQE problem is then to find $E_{min}$, which is given by $E_{min} = \min_\Theta E(\Theta) = \min_\Theta \langle \Psi(\Theta) | H | \Psi(\Theta) \rangle$.

A state $|\Psi(\Theta)\rangle$ is prepared and measured on the quantum computer in order to obtain an estimate of $E(\Theta)$ for that state. A classical optimiser is then used to choose new $\Theta$ parameters, and the process is repeated until convergence, at which point the resulting value of $E_{min}$ is chosen as an estimate of $E_0$.

The efficiency of the optimisation process will depend on the number of $\Theta$ parameters. In general, more evaluations of $\langle \Psi(\Theta) | H | \Psi(\Theta) \rangle$, and hence more quantum computational resources, are required to optimise over more parameters. Quantum computational resources are relatively costly, so it is desirable to minimise the number of $\Theta$ parameters. However, in order to obtain an accurate estimate of $E_0$, the parameterisation must enable the state $|\Psi_0\rangle$ to be prepared, which may require a large number of $\Theta$ parameters. A balance between accuracy and quantum computational resource usage is therefore required.

The state $|\Psi(\Theta)\rangle$ can be expressed as $|\Psi(\Theta)\rangle = U(\Theta)|\psi_0\rangle$, where $U(\Theta)$ is a unitary ansatz operator and $|\psi_0\rangle$ is some easily prepared quantum state, such as the computational $|0\rangle$ state or the Hartree-Fock state. The state $|\Psi(\Theta)\rangle$ can therefore be prepared by preparing the state $|\psi_0\rangle$ and performing the operation $U(\Theta)$ on this state.

The present inventors have recognised that the ansatz operator $U(\Theta)$ can sometimes be split into unitary

operators $U_1$ and $U_2$ as $U(\Theta) = U_1(\phi)U_2(\theta)$, where $U_1$ is a fermionic linear operator and $\phi$ and $\theta$ are parameters that describe the state $|\Psi(\phi,\theta)\rangle = U_1(\phi)U_2(\theta)|\psi_0\rangle$.

Fermionic linear operators $U_{FL}$ have the property $U_{FL}^\dagger\, a_i\, U_{FL} = \sum_{i'=1}^N A_{ii'} a_{i'}$, where $A_{ii'}$ are coefficients, $a_i$ is the quantum annihilation operator that removes an electron in the $i$th orbital in a chemical system, and $a_i^\dagger$ is creation operator $a_i^\dagger$ which places an electron in the $i$th orbital. For convenience, the state $|\Psi(\Theta)\rangle = U(\Theta)|\psi_0\rangle = U_1(\phi)U_2(\theta)|\psi_0\rangle$ will also be written as $|\Psi(\phi,\theta)\rangle$, i.e. $|\Psi(\phi,\theta)\rangle = U_1(\phi)U_2(\theta)|\psi_0\rangle$.

The creation and annihilation operators obey the anticommutation relations $\{a_i, a_j^\dagger\} = a_i a_j^\dagger + a_j^\dagger a_i = \delta_{ij}$ and $\{a_i, a_j\} = \{a_i^\dagger, a_j^\dagger\} = 0$.

The unitary $U_{FL}$ acts on the physical Hilbert space of dimension $2^N$, while the unitary matrix $\mathbf{A}$, which has elements $A_{ii'}$, acts on the mode space of dimension $N$. The most general form of a fermionic linear operator is $U_{FL} = VW$, where $W = \prod_{i=1}^N \prod_{j=1}^{i-1} e^{\left(\varphi_{ij}^W a_i^\dagger a_j\right) - \left(\varphi_{ij}^W a_i^\dagger a_j\right)^\dagger}$ and $V = \prod_{j=1}^N e^{i\varphi_j^V a_j^\dagger a_j}$ for some complex coefficients $\varphi_{ij}^W$ and real coefficients $\varphi_j^V$. $\phi_{FL}$ will be used to indicate the set of real coefficients that make up the $\varphi_{ij}^W$ and $\varphi_j^V$ coefficients, which are chosen to be $|\varphi_{ij}^W|$ and $\chi_{ij}^W := \arg \varphi_{ij}^W$ for $1 \le i \le N$ and $1 \le j < i$, and $\varphi_j^V$ for $1 \le j \le N$. $N(N - 1) + N = N^2$ coefficients are required to fully describe the possible fermionic linear operators.

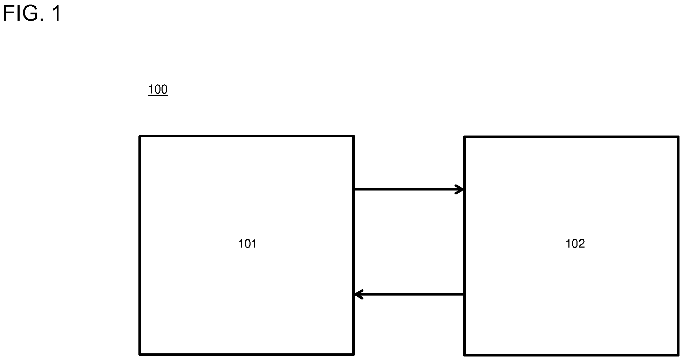

Figure 1 illustrates an exemplary quantum computing system 100 comprising a classical computer 101 in communication with a quantum computer 102.

The classical computer 101 comprises a classical processor and classical memory, and the quantum computer 102 comprises a quantum processor and may also comprise quantum memory. The quantum processor and the quantum memory may be indistinguishable in the sense that quantum operations may be performed directly on quantum states stored in the quantum memory.

Although the quantum computer 102 can theoretically perform all calculations that the classical computer 101 can perform, in practice the quantum computer 102 will normally only be used to perform calculations that cannot be performed efficiently on the classical computer 101, as the processing speed and memory capabilities of quantum computers are limited compared to classical computers. In addition to performing classical computations, the classical computer 101 is also used to directly or indirectly control the quantum computer 102, and measurements performed using the quantum computer are generally output to the classical computer 101.

Both the classical computer 101 and the quantum computer 102 could instead be replaced by networks of classical computers and quantum computers respectively, and it should be understood that any tasks performed by either of these entities could instead be distributed across components of such a network or performed in the cloud.

The arrows in Figure 1 represent data communications between the classical computer 101 and the quantum computer 102. These communications may be of any form, for example via wired or wireless connections, and may occur via intermediate devices, such as one or more servers. It should also be understood that the quantum computer 102 could be integrated into the classical computer 101, or the classical computer 101 could be a control system for the quantum computer 102.

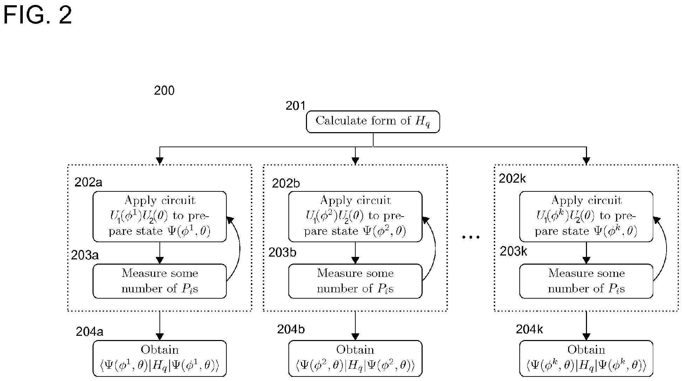

Figure 2 illustrates an existing method 200 for obtaining estimators of expectation values of a quantum operator $H_q$ using such a quantum computing system 100. The steps enclosed within dotted lines are those that are performed on the quantum computer 102, and the remaining steps are performed on the classical computer 101.

Estimators of expectation values may be referred to simply as expectation values in the following description, i.e. reference to an expectation value should be understood to mean an estimator representing the true expectation value. An estimator of an expectation value is an estimate of that expectation value in the same way that a sample mean is an estimator for a population mean. The estimators of expectation values may be calculated, for example, by averaging measured values.

At step 201, a representation of $H_q$ in the form $H_q = \sum_i c_i P_i$ is determined using the classical computer 101, where $c_i$ are real coefficients and $P_i$ are Pauli operators. The single-qubit Pauli operators $I, X, Y$ and $Z$ are matrices defined by $I = \begin{bmatrix} 1 & 0 \\ 0 & 1 \end{bmatrix}$, $X = \begin{bmatrix} 0 & 1 \\ 1 & 0 \end{bmatrix}$, $Y = \begin{bmatrix} 0 & -i \\ i & 0 \end{bmatrix}$ and $Z = \begin{bmatrix} 1 & 0 \\ 0 & -1 \end{bmatrix}$. Multi-qubit Pauli operators are formed from tensor products of the single-qubit Pauli operators.

For a chemical system, the electronic structure Hamiltonian in second quantised form has the form

$$H = \sum_{i,j,k,l=1}^{N} T_{ijkl} a_i^\dagger a_j^\dagger a_k a_l + \sum_{i,j=1}^{N} h_{ij} a_i^\dagger a_j$$ (subject to the addition of a constant), where $a_i^\dagger$ and $a_i$ are the creation and annihilation operators respectively on the $i$th spin orbital, and $T_{ijkl}$ and $h_{ij}$ are coefficients.

A representation of $H_q$ in the form $H_q = \sum_i c_i P_i$ can be determined for such a chemical system using methods such as the "Jordan-Wigner" mapping disclosed in P Jordan, & E Wigner, Z Physik (1928) 47: 631, or the "Bravyi-Kitaev" mapping disclosed in S Bravyi, J M Gambetta, A Mezzacapo & K Temme, "Tapering off qubits to simulate fermionic Hamiltonians", 2017, arXiv:1701.08213 [quant-ph]; both of these documents are hereby incorporated by reference.

At step 202a a state $|\Psi(\Theta_a)\rangle$ is prepared on the quantum computer 102 by applying the circuit $U(\Theta_a) = U_1(\phi^1)U_2(\theta)$ to the state $|\psi_0\rangle$, where $\phi^1$, $\phi^2$, ..., $\phi^k$ are $k$ values of $\phi$. Although the illustrated method shows the circuits $U_1(\phi^1)$ and $U_2(\theta)$ being performed, existing methods have not previously separated the ansatz operator $U(\Theta)$ into separate unitary operators $U_1$ and $U_2$ but have instead treated it as a single operation (i.e. $U_1(\phi^1)$ and $U_2(\theta)$ are implicitly performed during existing methods rather than explicitly performed, although the underlying operations may be equivalent to performing $U_2(\theta)$ followed by $U_1(\phi^1)$).

At this stage, the state $|\Psi(\Theta_a)\rangle$ has been prepared. It is generally not possible to measure $H_q$ directly, but the form $H_q = \sum_i c_i P_i$ means that the estimators of the expectation value of $H_q$ can be obtained through $\langle\Psi(\Theta_a)|H_q|\Psi(\Theta_a)\rangle = \sum_i c_i \langle\Psi(\Theta_a)|P_i|\Psi(\Theta_a)\rangle$, i.e. an estimator of the expectation value of $H_q$ can be calculated by measuring the Pauli operators $P_i$ for the state $|\Psi(\Theta_a)\rangle$ and calculating estimators of the associated expectation values $\langle\Psi(\Theta_a)|P_i|\Psi(\Theta_a)\rangle$.

Obtaining an estimator of the expectation value of $H_q$ for the state $|\Psi(\Theta_a)\rangle$ therefore requires the state $|\Psi(\Theta_a)\rangle$ to be measured using one or more Pauli operators $P_i$, which is performed in step 203a. Each of these measurements will generally be repeated in order to allow an accurate estimator of the expectation $\langle\Psi(\Theta_a)|P_i|\Psi(\Theta_a)\rangle$ to be determined by averaging the measurement outcomes obtained for that Pauli operator. As quantum measurements are destructive, each measurement requires the state $|\Psi(\Theta_a)\rangle$ to be freshly prepared (except when the measurements are commutative, in which case it may be possible to obtain measurements of multiple Pauli operators from a single state preparation), so steps 202a and 203a are repeated on the quantum computer 102 as needed to obtain an accurate estimator of $\langle\Psi(\Theta_a)|P_i|\Psi(\Theta_a)\rangle$ for each Pauli operator $P_i$.

In general, each measurement outcome will be output to the classical computer 101, which calculates the estimators of $\langle\Psi(\Theta_a)|P_i|\Psi(\Theta_a)\rangle$, for example by taking the mean of the measurement outcomes associated with each Pauli operator $P_i$.

The coefficients $c_i$ obtained in step 201 and the estimators of $\langle\Psi(\Theta_a)|P_i|\Psi(\Theta_a)\rangle$ obtained in step 203a are then used in step 204a to calculate an estimator of the expectation value $\langle\Psi(\Theta_a)|H_q|\Psi(\Theta_a)\rangle$ using the above equation $\langle\Psi(\Theta_a)|H_q|\Psi(\Theta_a)\rangle = \sum_i c_i \langle\Psi(\Theta_a)|P_i|\Psi(\Theta_a)\rangle$.

If expectation values for multiple states $|\Psi(\Theta_i)\rangle$ are required, steps 202a, 203a and 204a must be repeated for each state with different values of $\phi$ and/or $\theta$. Steps 202b, 203b and 204b illustrate this for a state $|\Psi(\Theta_b)\rangle = U_1(\phi^2)U_2(\theta)|\psi_0\rangle$, and steps 202k, 203k and 204k illustrate this for a state $|\Psi(\Theta_k)\rangle = U_1(\phi^k)U_2(\theta)|\psi_0\rangle$.

As with steps 202a and 203a, steps 202b and 203b and 202k and 203k are repeated on the quantum computer 102 as needed to allow accurate estimators of $\langle\Psi(\Theta_b)|P_i|\Psi(\Theta_b)\rangle$ and $\langle\Psi(\Theta_k)|P_i|\Psi(\Theta_k)\rangle$ respectively to be obtained for each Pauli operator $P_i$. Assuming that expectation values are being calculated for $k$ different states $|\Psi(\Theta_k)\rangle$, distinct steps equivalent to those in 202a and 203a must be performed on the quantum computer $k$ times, i.e. each set of steps contained within the dotted lines in Figure 2 results in an estimator of single expectation value associated with a single state $|\Psi(\Theta_k)\rangle$. In other words, each set of parameters $\phi$ and $\theta$ requires a fresh set of quantum computations to be performed on the quantum computer 102.

As with steps 202a and 203a, although steps 202b, 203b, 202k and 203k illustrate the operations $U_1$ and $U_2$, it was not previously known to write $U(\Theta)$ in this way and these operations, or operations equivalent to them, would have been performed implicitly rather than explicitly. $U(\Theta)$ has been written as a combination of $U_1$ and $U_2$ in Figure 2 in order to assist in describing the present invention and to illustrate its advantages over existing methods.

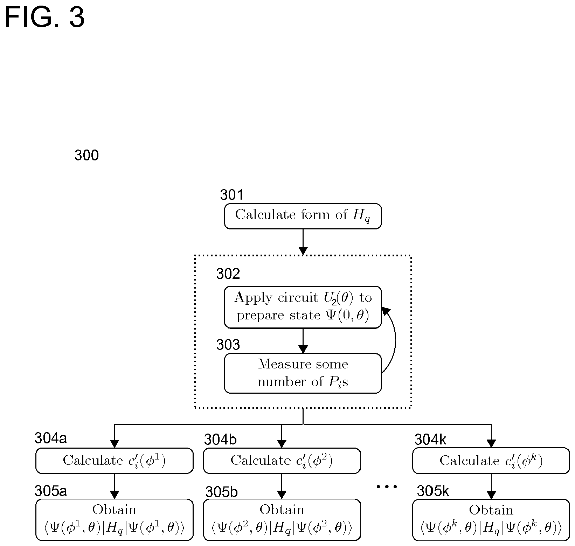

As mentioned above, the present inventors have recognised that the ansatz operator $U(\Theta)$ may be split into unitary operators $U_1$ and $U_2$ as $U(\Theta) = U_1(\phi)U_2(\theta)$, where $U_1$ is a fermionic linear operator. Moreover, the present inventors have discovered an improved method for obtaining estimators of one or more expectation values of a quantum operator using this relationship. This method 300 is illustrated in Figure 3.

As with Figure 2, the steps enclosed within dotted lines in Figure 3 are those that are performed on the quantum computer 102, and the remaining steps are performed on the classical computer 101.

Step 301 of the method 300 is the same as step 201 of the method 200 above, i.e. a representation of $H_q$ in the form $H_q = \sum_i c_i P_i$ is determined using the classical computer 101.

At step 302, a state $|\Psi(0,\theta)\rangle$ is prepared on the quantum computer 102 by performing the circuit $U_2(\theta)$ on the state $|\psi_0\rangle$. Unlike in step 202a above, no $U_1$ operator is performed.

Similar to step 203a above, one or more Pauli operators $P_i$ are measured on the quantum computer 102 in step 303 in order to determine estimators of the expectation values $\langle\Psi(0,\theta)|P_i|\Psi(0,\theta)\rangle$. To calculate this, the outcome of each measurement is ideally output by the quantum computer 102 to the classical computer 101 in order to allow the classical computer 101 to calculate the mean of the measurement outcomes for each Pauli operator $P_i$.

At this stage, estimators of the expectation values associated with the state $|\Psi(0,\theta)\rangle$ have been obtained.

In order to obtain an estimator of the expectation value $\langle\Psi(\phi,\theta)|H_q|\Psi(\phi,\theta)\rangle$ associated with a state $|\Psi(\phi,\theta)\rangle = U_1(\phi)U_2(\theta)|\psi_0\rangle$, the expectation value $\langle\Psi(\phi,\theta)|H_q|\Psi(\phi,\theta)\rangle$ is rewritten as

$$\langle\Psi(\phi,\theta)|H_q|\Psi(\phi,\theta)\rangle = \langle\psi_o|U_2^\dagger(\theta)U_1^\dagger(\phi)H_qU_1(\phi)U_2(\theta)|\psi_0\rangle$$

$$= \langle\Psi(0,\theta)|H_q'(\phi)|\Psi(0,\theta)\rangle,$$

where $H_q'(\phi) = U_1^\dagger(\phi)H_qU_1(\phi)$.

As $U_1$ is a linear fermionic operator, $H_q'(\phi)$ for a chemical system can be written as

$H_q'(\phi) = \sum_{i,j,k,l=1}^N T_{ijkl}'(\phi)\, a_i^\dagger a_j^\dagger a_k a_l + \sum_{i,j=1}^N h_{ij}'(\phi)a_i^\dagger a_j$ for new coefficients $T_{ijkl}'(\phi)$ and $h_{ij}'(\phi)$. Because this has the same form as $H_q$, but with different coefficients, $H_q'(\phi)$ can be further rewritten in the form

$H_q'(\phi) = \sum_i c_i'(\phi)P_i$ using the same methods as in step 301, for example using the Jordan-Wigner or Bravyi-Kitaev methods referenced above. The Pauli operators $P_i$ in $H_q'$ may not be exactly the same as those in $H_q$ as the non-zero $T_{ijkl}'$ and $h_{ij}'$ coefficients of $H_q'$ for a particular $\phi$ may not be the same as the no-zero $T_{ijkl}$ and $h_{ij}$ coefficients of $H_q$. However, the total number of terms in $H_q'$ will remain $O(N^4)$.

In step 304a, coefficients $c_i'(\phi^1)$ are calculated in this way on the classical computer 101 for a state $|\Psi(\phi^1,\theta)\rangle$ (i.e. the state with the same $\phi^1$ as in steps 202a, 203a and 204a of the above method 200).

An estimator of the expectation value $\langle\Psi(\phi^1,\theta)|H_q|\Psi(\phi^1,\theta)\rangle$ associated with the state $|\Psi(\phi^1,\theta)\rangle$ is then calculated on the classical computer 101 at step 305a using the relationship

$$\langle\Psi(\phi^1,\theta)|H_q|\Psi(\phi^1,\theta)\rangle = \langle\Psi(0,\theta)|H_q'(\phi^1)|\Psi(0,\theta)\rangle$$

$$= \sum_i c_i'(\phi^1)\,\langle\Psi(0,\theta)|P_i|\Psi(0,\theta)\rangle$$

i.e. the estimator of $\langle\Psi(\phi^1,\theta)|H_q|\Psi(\phi^1,\theta)\rangle$ is calculated using the $c_i'(\phi^1)$ coefficients from step 304a and the $\langle\Psi(0,\theta)|P_i|\Psi(0,\theta)\rangle$ expectation values from steps 302 and 303.

Unlike in the above method 200, obtaining estimators of the expectation values for additional states $|\Psi(\Theta)\rangle$ does not necessarily require additional quantum computations; estimators of the expectation values for states $\Psi(\phi^i,\theta)$ can be calculated on the classical computer 101 for all values of $\phi^i$ using the same estimators obtained in steps 302 and 303. Steps 304b and 305b illustrate this for the state $|\Psi(\Theta_b)\rangle = U_1(\phi^2)U_2(\theta)|\psi_0\rangle$, and steps 304k and 305k illustrate this for the state $|\psi(\Theta_k)\rangle = U_1(\phi^k)U_2(\theta)|\psi_0\rangle$.

Unlike the existing method 200, estimators of the expectation values can therefore be calculated for $k$ quantum states using only the quantum computations in step 302 and 303, i.e. the set of steps contained within the dotted lines in Figure 3 results in estimators of multiple expectation values for multiple states $|\Psi(\Theta)\rangle$. Compared to the existing method 200, the method 300 in Figure 3 therefore requires less quantum processing in order to obtain estimators of expectation values associated with an operator $H_q$.

Both of the above methods 200 and 300 result in estimators of the same expectation values being obtained (due to the inherently random nature of quantum computations, there may be small discrepancies between the actual values obtained for the estimators, which will also be the case when the same method is performed multiple times).

In general, using either of these methods to calculate a ground state energy will also require the method to be repeated for additional values of $\theta$ in order to ensure that the space of quantum states is searched sufficiently. The actual number of parameters $\phi$ and $\theta$ will depend upon the desired accuracy and how quickly the outcomes converge. While values for $\phi$ and $\theta$ could be predetermined, in practice it is likely that a classical optimiser will be used to choose the parameters on the fly, i.e. while the computation is in progress. The ground state energy will then be selected as the minimum estimator value of the expectation value $\langle\Psi(\phi,\theta)|H_q|\Psi(\phi,\theta)\rangle$.

As mentioned above, the method 300 is not limited to finding a ground state energy but can also be used to estimate the values of other quantum observables. The method 300 can be performed with any operator $H_q$ that can be represented as a sum of products of creation and annihilation operators and some coefficients.

In addition, the method 300 can also be used with partial derivatives of such operators. As the $c_i'$ coefficients are analytical functions of $\phi$, derivatives of the Hamiltonian $H_q'(\phi)$ can be obtained through $\frac{\partial H_q'}{\partial \phi_m} = \sum_i \frac{\partial c_i'}{\partial \phi_m} P_i$, where $\phi_m$ is the $m$th $\phi$ parameter, and similarly for higher order derivatives. Therefore, derivatives of the objective function $E(\phi,\theta) = \sum_i c_i'(\phi) \langle\Psi(0,\theta)|P_i|\Psi(0,\theta)\rangle$ with respect to the $\phi$ parameters are given by $\frac{\partial E}{\partial \phi_m} = \sum_i \frac{\partial c_i'}{\partial \phi_m} \langle\Psi(0,\theta)|P_i|\Psi(0,\theta)\rangle$. When finding the ground state energy, such derivatives can be used as part of the optimisation routine that seeks to find the minimum of $E(\phi,\theta)$.

While the above method 300 writes the ansatz operator $U(\Theta)$ in terms of $U_1(\phi)$ and $U_2(\theta)$, the $U_1$ operator obtained in this way will not necessarily be a fermionic linear operator of the most general form, i.e. that given by $U_{FL} = VW$ above. $U_1$ could therefore be replaced with the general operator $U_{FL}$, and the optimisation could be performed over the parameters $\phi_{FL}$ (i.e. the real set of coefficients that define $V$ and $W$) instead of over the $\phi$ parameters that define $U_1$. While this will result in more parameters and require estimators for more expectation values to be calculated, the extra parameters may allow a closer estimation to the true ground state to be determined, and extra processing is performed on the classical computer so does not require additional quantum computation resources.

As the estimators of the expectations $\langle\Psi(\phi,\theta)|H_q|\Psi(\phi,\theta)\rangle$ are obtained in the above method 300 by making multiple measurements of each Pauli operator $P_i$ on the state $|\Psi(0,\theta)\rangle$, there is a level of uncertainty in each expectation estimate. Assuming each Pauli operator is measured independently, such that their uncertainties are uncorrelated, the overall uncertainty $\Delta H_q'$ in the Hamiltonian expectation is given by $\left(\Delta H_q'\right)^2 = \sum_i \frac{c_i'(\phi)^2 p_i^2}{N_i}$, where $N_i$ is the number of measurements of $P_i$ obtained and $p_i^2 = \langle\Psi(0,\theta)|P_i^2|\Psi(0,\theta)\rangle - \langle\Psi(0,\theta)|P_i|\Psi(0,\theta)\rangle^2 = 1 - \langle\Psi(0,\theta)|P_i|\Psi(0,\theta)\rangle^2$. In order to minimise the total number of measurements required to obtain the expectation of the Hamiltonian to within an error margin $\epsilon$, $N_i$ should be chosen to be $N_i = \frac{c_i'(\phi)p_i}{\epsilon^2} \sum_j c_j'(\phi)p_j$.

The $p_i$ are functions of $\theta$ only, and so remain the same for all states related through action of a fermionic linear operator. However, the coefficients $c_i'$ are functions of $\phi$ and so will vary depending on the particular state. Different values of $\phi$ may therefore require different numbers of measurements of the Pauli operators. Therefore, the above method 300 trades an increase in the number of measurements required per set of $\theta$ values in exchange for a reduction in the number of parameters that must be explored using different quantum states. A simple way to ensure all Hamiltonian expectations are obtained to within an uncertainty of $\epsilon$ is to take $N_i$ to be the maximum value obtained by equation $N_i = \frac{c_i'(\phi)p_i}{\epsilon^2} \sum_j c_j'(\phi)p_j$ for any state.

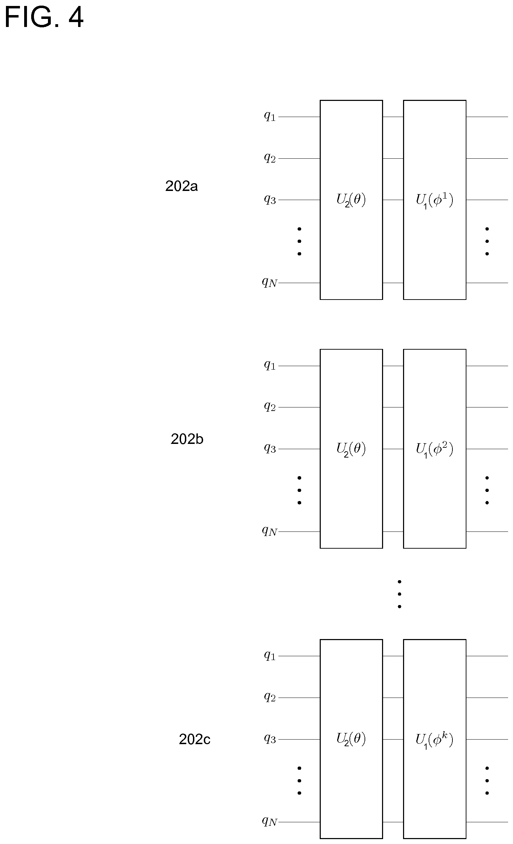

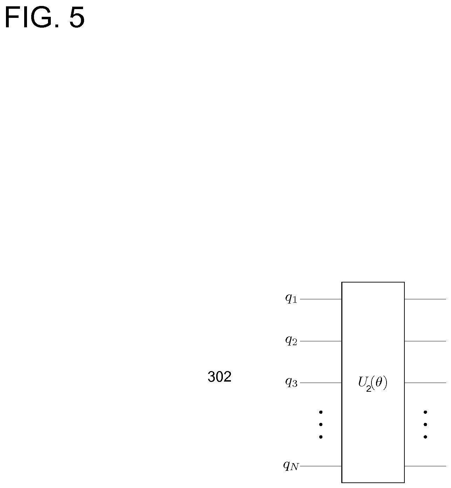

As mentioned above, compared to the existing method 200, the present method 300 reduces quantum computation resource requirements. This is illustrated in Figures 4 and 5, which show the quantum resources required to calculate estimators of $k$ expectation values using the existing method 200 and the present method 300 respectively.

As shown in Figure 4, which illustrates the quantum circuits required for each of steps 202a, 202b and 202k, calculating estimators of $k$ expectation values using the existing method 200 requires the operators $U_1$ and $U_2$ to be applied to a quantum state $|\psi_0\rangle$ for $k$ different combinations of $\phi$. Note that each of steps 202a, 202b and 202k will be repeated a number of times as described above.

In contrast, as shown in Figure 4, which illustrates the quantum circuits required for steps 302 and 303, calculating estimators of $k$ expectation values using the present method 300 requires only the operator $U_2$ to be applied to the quantum state $|\psi_0\rangle$, and this is only applied for one round of measurements (i.e. not for multiple values of $\phi$). Again, each of steps 302 and 303 will be repeated a number of times as described above. Processing has effectively been offloaded from the quantum computer to the classical computer.

Not only are there fewer round of quantum computations required (one round instead of $k$ rounds), but each round also requires fewer quantum operations (only $U_2$ is performed, not $U_1$ and $U_2$). This means that the quantum computational resources required to compute an estimator for a single expectation value are lower using the present method 300 than for the existing method 200.

The benefits of reduced quantum computational resource usage therefore exist even when computing an estimator for just one expectation value, with the benefits being even greater when computing estimators for multiple expectation values. The circuit depth is reduced and the number of parameters whose variation requires computation on the quantum computer is reduced by $O(N^2)$ (i.e. the present method leads to a decrease in the quantum resources required compared to existing methods), typically leading to a smaller number of state preparations.

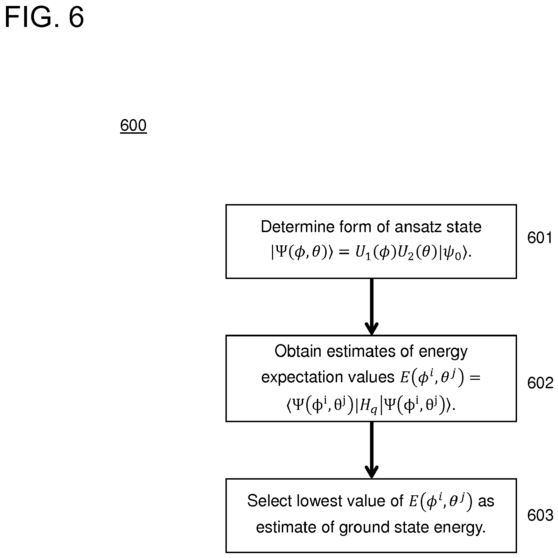

A method 600 for estimating the ground state energy of a Hamiltonian $H_q$ using the above method 300 is illustrated in Figure 6.

A suitable ansatz state and associated operators $U_1(\phi)$ and $U_2(\theta)$ are chosen at step 601. This could be determined using the classical computer 101, or may be determined manually by the user. Exact details of how $U_1(\phi)$ and $U_2(\theta)$ are determined will depend on the problem being solved.

At step 602, estimators of the energy $E(\phi^i, \theta^i) = \langle \Psi(\phi^i, \theta^i)|H_q|\Psi(\phi^i, \theta^i)\rangle$ are determined for multiple values of $\phi^i$ and $\theta^i$ using the above method 300.

At step 603 the lowest estimator of $E(\phi^i, \theta^i)$ is chosen as the estimate of the ground state.

## Example: UCC ansatz

One commonly used method of state preparation is the unitary coupled cluster (UCC) ansatz, which is motivated by classical computational chemistry algorithms. A full discussion of the UCC ansatz is given in Romero et al., "Strategies for quantum computing molecular energies using the unitary coupled cluster ansatz.", Quantum Science and Technology, 4(1);014008, 2018, which is hereby incorporated by reference.

Having applied the UCC ansatz, the prepared state has the form $|\Psi\rangle = e^{T-T^\dagger}|HF\rangle$, where $|HF\rangle$ is the Hartree-Fock state, the single computational basis state believed to be closest to the ground state. The operator $T$ is given by $T = \sum_{i=1}^{n_{exc}} T_i$, where $n_{exc}$ is at a maximum equal to the number of electrons, but is commonly chosen to be 2. The terms $T_i$ have the form $T_1 = \sum_{i \in occ, a \in virt} t_a^i a_a^\dagger a_i$, $T_2 = \sum_{i,j \in occ, a,b \in virt} t_{ab}^{ij} a_a^\dagger a_b^\dagger a_i a_j$ etc., where $occ$ and $virt$ are the spin orbitals in the Hartree-Fock state that are occupied and unoccupied respectively.

We can therefore write the UCC operator, $U_{UCC} = e^{T-T^\dagger}$, as $U_{UCC} = e^{\sum_i T_i - T_i^\dagger}$, which can be further written as $U_{UCC} \approx \left[ e^{\frac{1}{\rho}\left(T_1 - T_1^\dagger\right)} e^{\frac{1}{\rho}\left(\Sigma_{i>1} T_i - T_i^\dagger\right)} \right]^\rho$. Taking $\rho = 1$, $U_{UCC} \approx U_{trot} = U_1 U_2 := e^{\left(T_1 - T_1^\dagger\right)} e^{\left(\Sigma_{i>1} T_i - T_i^\dagger\right)}$.

The first term in $U_{trot}$, $U_1 := e^{\left(T_1 - T_1^\dagger\right)}$, is a linear fermionic operator. The values of $t_a^i$ could be optimised over as the values of $\phi$, or alternatively $U_1$ could be replaced with the more general form of a fermionic linear operator, $U_{FL} = VW$ (as described above), and the optimisation could be performed over the values of the parameters $\phi_{FL}$ and $t_{ab}^{ij}$ ( $t_{ab}^{ij}$ being the parameters of $U_2$).

For a given set of parameters $t_{ab}^{ij}$, the state $U_2|HF\rangle$ can be prepared (or, rather, an approximation to it, as $U_2$ cannot be applied directly and is instead approximated though trotterization using the process first described in H F Trotter, "On the product of semi-groups of operators," Proc. Amer. Math. Soc. 10, 545-551 (1959)), which is hereby incorporated by reference). From each preparation, a measurement of one or more of the Pauli operators $P_i$ can be made and used to obtain estimators of each of the expectations $\langle HF|U_2^\dagger(\theta) P_i U_2(\theta)|HF\rangle$.

From these estimators, an estimation of the expectation of the Hamiltonian with respect to all states that have fixed parameters $t_{ab}^{ij}$ and any values of $\phi_{FL}$ parameters can be obtained (subject to errors, as outlined above).

As mentioned previously, although the above methods have been described in relation to obtaining an estimate of the ground state energy of a chemical system, the methods described herein can also be used in estimating values of other quantum observables.

Although the above disclosure has been given with reference to quantum circuits, one skilled in the art will appreciate that the method is applicable to any universal quantum computation scheme, including quantum circuits, adiabatic quantum computation, topological quantum computation, measurement-based quantum computation and quantum walks. The quantum states may be stored in any suitable quantum entities, for example two-state qubits, or *d*-state qudits.

Likewise, the above methods can be performed on any suitable physical architecture, for example linear-optical systems, superconducting Josephson junction systems, trapped ion systems, quantum dot systems, Rydberg atom systems, or combinations thereof.

The above methods can also be performed fault-tolerantly, for example by encoding the quantum states and operators as logical states and operators respectively in quantum error correction schemes in order to mitigate the effects of decoherence.

The methods described above may also be stored as instructions on a computer-readable medium to be executed by one or more classical and quantum processors.

## MATHEMATICAL APPENDICES

### A. The forms of $U_{FL}$ and A

We recall that the action of a fermionic linear operator, $U_{FL}$, on the annihilation operator $a_i$ is described by $U_{FL}^\dagger a_i U_{FL} = \sum_{i'=1}^N A_{ii'} a_{i'}$ for some coefficients $A_{ii'}$. Defining **a** to be a vector of size $N$ with elements $a_i$ and **A** to be a unitary matrix of size $N \times N$ with elements $A_{ii'}$, we can write this equation for all $i$ as $U_{FL}^\dagger U_{FL} \mathbf{a} U_{FL} = \mathbf{Aa}$.

We can see that this is a linear equation, and so can consider the action of **A** on each $a_i$ in some sum of terms individually. We will now justify the general form $U_{FL} = VW$, where $W = \prod_{i=1}^N \prod_{j=1}^{i-1} e^{\left(\varphi_{ij}^W a_i^\dagger a_j\right) - \left(\varphi_{ij}^W a_i^\dagger a_j\right)^\dagger}$ and $V = \prod_{j=1}^N e^{i\varphi_j^V a_j^\dagger a_j}$ for some complex coefficients $\varphi_{ij}^W$ and real coefficients $\varphi_j^V$.

In order to do so, we make use of Kivlichan et al., "Quantum simulation of electronic structure with linear depth and connectivity.", Phys. Rev. Lett., 120:110501, Mar 2018, doi:10.1103/PhysRevLett.120.110501, which is hereby incorporated by reference.

We first note that **A** must be unitary. For any complex square matrix, we can perform a QR decomposition to find **A** = **QR**, where **Q** is unitary and **R** is upper-rectangular. Since **A** and **Q** are both unitary, **R** must also be unitary. Since **R** is unitary and upper-rectangular, it must be diagonal with elements of unit magnitude.

For a given **A**, **R** can be any such matrix. However, the QR decomposition is performed using a sequence of Givens rotations, which results in an **R** such that the diagonal elements of **Q** are real. Note that if **A** is real then the $\varphi_{ij}^W$ coefficients can also be taken to be real, and the $\varphi_j^V$ coefficients can be taken to be zero.

We will now derive the form of **A**, and show that $W$ and $V$ as defined above give **Q** and **R** with the correct properties. We have defined $W$ to be the physical unitary corresponding to **Q** and V to be the physical unitary corresponding to **R**. We can see that $U_{FL}^\dagger \mathbf{a} U_{FL}$ will have the form $U_{FL}^\dagger \mathbf{a} U_{FL} = W^\dagger V^\dagger \mathbf{a} V W = \mathbf{QRa}$, and so, by taking each term from the inside outwards, $\mathbf{A} = \mathbf{Q}_{N,1} \dots \mathbf{Q}_{2,1} \dots \mathbf{Q}_{N,N-1} \mathbf{R}_1 \dots \mathbf{R}_N$, where we have made the ordering of the products explicit and have defined $\mathbf{Q}_{ij}$ and $\mathbf{R}_j$ through $U_{ij}^{W\dagger} \mathbf{a} U_{ij}^W = \mathbf{Q}_{ij}\mathbf{a}$ and $U_j^{V\dagger} \mathbf{a} U_j^V = \mathbf{R}_j\mathbf{a}$.

In order to derive the forms of $\mathbf{Q}_{ij}$ and $\mathbf{R}_j$, we perform Taylor expansions to find

$$U_{ij}^W = 1 + \left(cos\left|\varphi_{ij}^W\right| - 1\right)\left(a_i^\dagger a_i + a_j^\dagger a_j - 2a_i^\dagger a_i a_j^\dagger a_j\right)$$
$$+ sin\left|\varphi_{ij}^W\right|\left(e^{i\chi_{ij}^W} a_i^\dagger a_j - e^{-i\chi_{ij}^W} a_j^\dagger a_i\right)$$

$$U_j^V = 1 + \left(e^{i\varphi_j^V} - 1\right)a_j^\dagger a_j$$

where we have defined $\chi_{ij}^W = \arg \varphi_{ij}^W$ so that $\varphi_{ij}^W = \left|\varphi_{ij}^W\right| e^{i\chi_{ij}^W}$. Taking the product $U_{ij}^{W\dagger} a_k U_{ij}^W$, we find

$$U_{ij}^{W\dagger} a_i U_{ij}^{W} = a_i \cos\left|\varphi_{ij}^{W}\right| + a_j e^{i\chi_{ij}^{W}} \sin\left|\varphi_{ij}^{W}\right|,$$

$$U_{ij}^{W\dagger} a_j U_{ij}^{W} = a_j \cos\left|\varphi_{ij}^{W}\right| - a_i e^{-i\chi_{ij}^{W}} \sin\left|\varphi_{ij}^{W}\right|,$$

$$U_{ij}^{W\dagger} a_k U_{ij}^{W} = a_k, \quad k \neq i, k \neq j,$$

and so

$$
\mathbf{Q}_{ij} =
\begin{array}{ccccccccc}
& 1 & \cdots & j & \cdots & i & \cdots & N & \\
\begin{pmatrix}
1 & \cdots & 0 & \cdots & 0 & \cdots & 0 \\
\vdots & \ddots & \vdots & \ddots & \vdots & \ddots & \vdots \\
0 & \cdots & c & \cdots & -s'^* & \cdots & 0 \\
\vdots & \ddots & \vdots & \ddots & \vdots & \ddots & \vdots \\
0 & \cdots & s' & \cdots & c & \cdots & 0 \\
\vdots & \ddots & \vdots & \ddots & \vdots & \ddots & \vdots \\
0 & \cdots & 0 & \cdots & 0 & \cdots & 1
\end{pmatrix}
&
\begin{array}{c}
1 \\ \vdots \\ j \\ \vdots \\ i \\ \vdots \\ N
\end{array}
\end{array},
$$

where $c = \cos\left|\varphi_{ij}^{W}\right|$ and $s' = e^{i\chi_{ij}^{W}} \sin\left|\varphi_{ij}^{W}\right|$. This is unitary and has real diagonal coefficients. Each $\mathbf{Q}_{ij}$ corresponds to a Givens rotation. Therefore, $W$ of the above form gives the general $\mathbf{Q}$ with the desired properties.

Instead taking the product $U_j^{V\dagger} a_k U_j^{V}$, we find $U_j^{V\dagger} a_j U_j^{V} = e^{i\varphi_j^{V}} a_j$ and $U_j^{V\dagger} k U_j^{V} = a_k, k \neq j$, and so

$$
\mathbf{R}_j =
\begin{array}{ccccccc}
& 1 & \cdots & j & \cdots & N & \\
\begin{pmatrix}
1 & \cdots & 0 & \cdots & 0 \\
\vdots & \ddots & \vdots & \ddots & \vdots \\
0 & \cdots & e^{i\varphi_j^{V}} & \cdots & 0 \\
\vdots & \ddots & \vdots & \ddots & \vdots \\
0 & \cdots & 0 & \cdots & 1
\end{pmatrix}
&
\begin{array}{c}
1 \\ \vdots \\ j \\ \vdots \\ N
\end{array}
\end{array}.
$$

This is diagonal with elements of unit magnitude, as required, and the full matrix $\mathbf{R}$ will have the most general form of such a matrix. Therefore, $V$ is given by the above equation. Given $U_{FL}$ in the form of $U_{FL} = VW$, we can also construct $\mathbf{A}$ from the above equations.

*A.1 Derivatives of A*

In this section, we derive the form of the derivatives of $\mathbf{A}$ with respect to the $\phi$ parameters. These will be used in appendix B to give the derivatives of $H'$.

Here, we choose the $\phi$ parameters to be $\left|\varphi_{ij}^{W}\right|$, $\chi_{ij}^{W}$ and $\varphi_i^{V}$ for $1 \leq i \leq N$ and $1 \leq j < i$. We note that other choices are possible, particularly in the representation of the complex numbers $\varphi_{ij}^{W}$ - derivatives can also be derived in these cases but may result in different forms. Let us first consider the derivative of **A** with respect to any of the $\varphi_k^V$, which is clearly given by

$$\frac{\partial \mathbf{A}}{\partial \varphi_k^V} = \mathbf{Q}\frac{\partial \mathbf{R}}{\partial \varphi_k^V} = \mathbf{Q}\,\mathbf{R}_1 \dots \frac{\partial \mathbf{R}_k}{\partial \varphi_k^V} \dots \mathbf{R}_N,$$

where we have made use of the above forms of **A**. From the equation for $\mathbf{R}_j$, we can see that

$$\frac{\partial \mathbf{R}_k}{\partial \varphi_k^V} = \begin{pmatrix} 1 & \cdots & 0 & \cdots & 0 \\ \vdots & \ddots & \vdots & \ddots & \vdots \\ 0 & \cdots & ie^{i\varphi_k^V} & \cdots & 0 \\ \vdots & \ddots & \vdots & \ddots & \vdots \\ 0 & \cdots & 0 & \cdots & 1 \end{pmatrix} = \begin{pmatrix} 1 & \cdots & 0 & \cdots & 0 \\ \vdots & \ddots & \vdots & \ddots & \vdots \\ 0 & \cdots & e^{i\left(\varphi_k^V + \frac{\pi}{2}\right)} & \cdots & 0 \\ \vdots & \ddots & \vdots & \ddots & \vdots \\ 0 & \cdots & 0 & \cdots & 1 \end{pmatrix} = \mathbf{R}_k(\varphi_k^V + \tfrac{\pi}{2}),$$

as $i = e^{i\frac{\pi}{2}}$. Making use of the above form of **A**, we can similarly see that

$$\frac{\partial \mathbf{A}}{\partial |\varphi_{kl}^W|} = \frac{\partial \mathbf{Q}}{\partial |\varphi_{kl}^W|}\mathbf{R} = \mathbf{Q}_{N,1} \dots \frac{\partial \mathbf{Q}_{kl}}{\partial |\varphi_{kl}^W|} \dots \mathbf{Q}_{N,N-1}\,\mathbf{R},$$

$$\frac{\partial \mathbf{A}}{\partial \chi_{kl}^W} = \frac{\partial \mathbf{Q}}{\partial \chi_{kl}^W}\mathbf{R} = \mathbf{Q}_{N,1} \dots \frac{\partial \mathbf{Q}_{kl}}{\partial \chi_{kl}^W} \dots \mathbf{Q}_{N,N-1}\,\mathbf{R}.$$

From the above form of $\mathbf{Q}_{ij}$, we find

$$\frac{\partial \mathbf{Q}_{kl}}{\partial |\varphi_{kl}^W|} = \begin{pmatrix} 1 & \cdots & 0 & \cdots & 0 & \cdots & 0 \\ \vdots & & \vdots & & \vdots & & \vdots \\ 0 & \cdots & -\sin(|\varphi_{kl}^W|) & \cdots & -e^{-i\chi_{ij}^W}\cos(|\varphi_{kl}^W|) & \cdots & 0 \\ \vdots & & \vdots & & \vdots & & \vdots \\ 0 & \cdots & e^{i\chi_{ij}^W}\cos(|\varphi_{kl}^W|) & \cdots & -\sin(|\varphi_{kl}^W|) & \cdots & 0 \\ \vdots & & \vdots & & \vdots & & \vdots \\ 0 & \cdots & 0 & \cdots & 0 & \cdots & 1 \end{pmatrix}$$

$$= \begin{pmatrix} 1 & \cdots & 0 & \cdots & 0 & \cdots & 0 \\ \vdots & & \vdots & & \vdots & & \vdots \\ 0 & \cdots & \cos(|\varphi_{kl}^W| + \frac{\pi}{2}) & \cdots & -e^{-i\chi_{ij}^W}\sin(|\varphi_{kl}^W| + \frac{\pi}{2}) & \cdots & 0 \\ \vdots & & \vdots & & \vdots & & \vdots \\ 0 & \cdots & e^{i\chi_{ij}^W}\sin(|\varphi_{kl}^W| + \frac{\pi}{2}) & \cdots & \cos(|\varphi_{kl}^W| + \frac{\pi}{2}) & \cdots & 0 \\ \vdots & & \vdots & & \vdots & & \vdots \\ 0 & \cdots & 0 & \cdots & 0 & \cdots & 1 \end{pmatrix} = \mathbf{Q}\left((|\varphi_{kl}^W| + \tfrac{\pi}{2})e^{i\chi_{kl}^W}\right),$$

and

$$\frac{\partial \mathbf{Q}_{kl}}{\partial \chi_{kl}^W} = \begin{pmatrix} 1 & \cdots & 0 & \cdots & 0 & \cdots & 0 \\ \vdots & & \vdots & & \vdots & & \vdots \\ 0 & \cdots & \cos|\varphi_{ij}^W| & \cdots & ie^{-i\chi_{ij}^W}\sin|\varphi_{ij}^W| & \cdots & 0 \\ \vdots & & \vdots & & \vdots & & \vdots \\ 0 & \cdots & ie^{i\chi_{ij}^W}\sin|\varphi_{ij}^W| & \cdots & \cos|\varphi_{ij}^W| & \cdots & 0 \\ \vdots & & \vdots & & \vdots & & \vdots \\ 0 & \cdots & 0 & \cdots & 0 & \cdots & 1 \end{pmatrix}$$

$$= \begin{pmatrix} 1 & \cdots & 0 & \cdots & 0 & \cdots & 0 \\ \vdots & & \vdots & & \vdots & & \vdots \\ 0 & \cdots & \cos|\varphi_{ij}^W| & \cdots & -e^{-i(\chi_{ij}^W+\frac{\pi}{2})}\sin|\varphi_{ij}^W| & \cdots & 0 \\ \vdots & & \vdots & & \vdots & & \vdots \\ 0 & \cdots & e^{i(\chi_{ij}^W+\frac{\pi}{2})}\sin|\varphi_{ij}^W| & \cdots & \cos|\varphi_{ij}^W| & \cdots & 0 \\ \vdots & & \vdots & & \vdots & & \vdots \\ 0 & \cdots & 0 & \cdots & 0 & \cdots & 1 \end{pmatrix} = \mathbf{Q}\left(|\varphi_{kl}^W|e^{i(\chi_{kl}^W+\frac{\pi}{2})}\right),$$

where we have used the identities $\cos\left(\alpha + \frac{\pi}{2}\right) = -\sin(\alpha)$ and $\sin\left(\alpha + \frac{\pi}{2}\right) = \cos(\alpha)$.

Therefore, we can write $\frac{\partial \mathbf{A}}{\partial \phi_m} = \mathbf{A}(\phi + \frac{\pi}{2}_m)$, where $\frac{\pi}{2}_m$ indicates a value of $\frac{\pi}{2}$ on the mth $\phi$ parameter.

**B. The form of *H'***

We recall that the Hamiltonian has the form

$$H = \sum_{i,j,k,l=1}^{N} T_{ijkl}\, a_i^\dagger a_j^\dagger a_k a_l + \sum_{i,j=1}^{N} h_{ij} a_i^\dagger a_j.$$

In the above description, we state that $U_{FL}^\dagger H U_{FL} = H'$, where

$$H' = \sum_{i,j,k,l=1}^{N} T'_{ijkl}\, a_i^\dagger a_j^\dagger a_k a_l + \sum_{i,j=1}^{N} h'_{ij} a_i^\dagger a_j.$$

Here, we will derive this form of *H'*, and how $T'_{ijkl}$ and $h'_{ij}$ relate to $T_{ijkl}$ and $h_{ij}$ respectively. A key property of interest is that, as $U_{FL}$ is unitary,

$$U^{\dagger}_{FL}a^{\dagger}_i a_j U_{FL} = \left[ U^{\dagger}_{FL} a^{\dagger}_i U_{FL} \right] \left[ U^{\dagger}_{FL} a_j U_{FL} \right]$$

$$= \left[ U^{\dagger}_{FL} a_i U_{FL} \right]^{\dagger} \left[ U^{\dagger}_{FL} a_j U_{FL} \right]$$

$$= \left[ \sum_{i'=1}^{N} A_{i,i'} a_{i'} \right]^{\dagger} \left[ \sum_{j'=1}^{N} A_{j,j'} a_{j'} \right]$$

$$= \sum_{i',j'=1}^{N} A^{*}_{i,i'} A_{j,j'} a^{\dagger}_{i'} a_{j'}.$$

Therefore

$$U^{\dagger}_{FL} \left[ \sum_{i,j=1}^{N} h_{ij} a^{\dagger}_i a_j \right] U_{FL} = \sum_{i,j,i',j'=1}^{N} A^{*}_{i,i'} h_{ij} A_{j,j'} a^{\dagger}_{i'} a_{j'}$$

$$= \sum_{i,j,i',j'=1}^{N} A^{\dagger}_{i',i} h_{ij} A_{j,j'} a^{\dagger}_{i'} a_{j'}$$

$$= \sum_{i',j'=1}^{N} \left[ \sum_{i,j=1}^{N} A^{\dagger}_{i',i} h_{ij} A_{j,j'} \right] a^{\dagger}_{i'} a_{j'}$$

$$= \sum_{i,j=1}^{N} h'_{ij} a^{\dagger}_i a_j,$$

where in the last line we have defined $\mathbf{h}' = \mathbf{A}^{\dagger}\mathbf{h}\mathbf{A}$ for $N \times N$ matrices $\mathbf{h}$ and $\mathbf{h}'$ with elements $h_{ih}$ and $h'_{ij}$ respectively, and relabelled $i' \to i$ and $j' \to j$. In a similar manner, we can also find that

$$U^{\dagger}_{FL} a^{\dagger}_i a^{\dagger}_j a_k a_l U_{FL} = \sum_{i',j',k',l'=1}^{N} A^{*}_{i,i'} A^{*}_{j,j'} A_{k,k'} A_{l,l'} a^{\dagger}_{i'} a^{\dagger}_{j'} a_{k'} a_{l'},$$

and so

$$U^{\dagger}_{FL} \left[ \sum_{i,j,k,l=1}^{N} T_{ijkl} a^{\dagger}_i a^{\dagger}_j a_k a_l \right] U_{FL} = \sum_{i,j,k,l=1}^{N} T'_{ijkl} a^{\dagger}_i a^{\dagger}_j a_k a_l,$$

where

$$T'_{ijkl} = \sum_{i',j',k',l'=1}^{N} A^{\dagger}_{i,i'} A^{\dagger}_{j,j'} T_{i'j'k'l'} A_{k',k} A_{l',l}.$$

Therefore, as claimed, the above form of *H'* holds.

*B.1 Derivatives of H'*

In this section, we give the form of the derivatives of *H'* with respect to the parameters $\phi$. From the above form of *H'* it is clear that

$$\frac{\partial H'}{\partial \phi_m} = \sum_{i,j,k,l=1}^{N} \frac{\partial T'_{ijkl}}{\partial \phi_m} a_i^\dagger a_j^\dagger a_k a_l + \sum_{i,j=1}^{N} \frac{\partial h'_{ij}}{\partial \phi_m} a_i^\dagger a_j,$$

where we recall that $\phi_m$ is the *m*th $\phi$ parameter. From the equations for **h'** and $T'_{ijkl}$, we find

$$\frac{\partial h'_{ij}}{\partial \phi_m} = \sum_{i',j'=1}^{N} \left[ \frac{\partial A_{i,i'}^\dagger}{\partial \phi_m} h_{i',j'} A_{j',j} + A_{i,i'}^\dagger h_{i',j'} \frac{\partial A_{j',j}^\dagger}{\partial \phi_m} \right],$$

$$\frac{\partial T'_{ijkl}}{\partial \phi_m} = \sum_{i',j',k',l'=1}^{N} \left[ \frac{\partial A_{i,i'}^\dagger}{\partial \phi_m} A_{j,j'}^\dagger T_{i'j'k'l'} A_{k',k} A_{l',l} + A_{i,i'}^\dagger \frac{\partial A_{j,j'}^\dagger}{\partial \phi_m} T_{i'j'k'l'} A_{k',k} A_{l',l} \right.$$
$$\left. + A_{i,i'}^\dagger A_{j,j'}^\dagger T_{i'j'k'l'} \frac{\partial A_{k',k}}{\partial \phi_m} A_{l',l} + A_{i,i'}^\dagger A_{j,j'}^\dagger T_{i'j'k'l'} A_{k',k} \frac{\partial A_{l',l}}{\partial \phi_m} \right],$$

and so can use the above equation $\frac{\partial A}{\partial \phi_m} = A(\phi + \frac{\pi}{2}{}_m)$ to obtain the derivatives of *H'* given by the above equation

for $\frac{\partial H'}{\partial \phi_m}$.

**Claims**

1. A method of operating a quantum computer using a classical computer in order to estimate a value of an observable for a physical system represented by a quantum operator $H = \sum_i c_i P_i$, wherein $P_i$ are Pauli operators and $c_i$ are real coefficients, the method comprising:

   with a state $|\Psi(\phi,\theta)\rangle = U_1(\phi)U_2(\theta)|\psi_0\rangle$, wherein $U_2(\theta)$ is a unitary operator, $U_1(\phi)$ is a fermionic linear unitary operator, and $|\psi_0\rangle$ is an initial quantum state that can be prepared on the quantum computer, performing the following steps for one or more values of $\theta$:

   controlling the quantum computer to obtain one or more measurement values of a state $|\Psi(0,\theta)\rangle = U_2(\theta)|\psi_0\rangle$ for one or more operators $P_i$; and,
   calculating, on the classical computer, one or more estimators of $\langle\Psi(0,\theta)|P_i|\Psi(0,\theta)\rangle$ using the obtained measurement values, wherein each of the one or more estimators is associated with one of the one or more operators $P_i$; and,

   for at least one of the one or more values of $\theta$, using at least one of the one or more estimators to calculate, on the classical computer, an estimated expectation value associated with the state $|\Psi(\phi,\theta)\rangle$.

2. The method of claim 1, wherein controlling the quantum computer to obtain one or more measurement values of the state $|\Psi(0,\theta)\rangle = U_2(\theta)|\psi_0\rangle$ for one or more operators $P_i$ comprises performing the following steps on the quantum computer for each of the one or more operators $P_i$ :

preparing the initial quantum state $|\psi_0\rangle$;
applying $U_2(\theta)$ to the initial quantum state to obtain the state $|\Psi(0,\theta)\rangle = U_2(\theta)|\psi_0\rangle$;
performing a measurement of the operator $P_i$ on the state $|\Psi(0,\theta)\rangle$ to obtain a measurement outcome; and,
outputting the obtained measurement outcome to the classical computer.

3. The method of claim 1 or claim 2, wherein using at least one of the one or more estimators to calculate the estimated expectation value associated with the state $|\Psi(\phi,\theta)\rangle$ comprises:

calculating, on the classical computer, coefficients $c_i'(\phi)$, wherein $H = \sum_i c_i'(\phi) U_1(\phi) P_i U_1^\dagger(\phi)$ ; and,

calculating, on the classical computer, an estimated expectation value
$E(\phi,\theta) = \sum_i c_i'(\phi) \langle \Psi(0,\theta)|P_i|\Psi(0,\theta)\rangle$ associated with the state $|\Psi(\phi,\theta)\rangle$.

4. The method of any preceding claim, wherein the method comprises calculating a plurality of estimated expectation values for a plurality of combinations of $\phi$ and $\theta$.

5. The method of any preceding claim, wherein the observable is an energy.

6. The method of claim 5, wherein the quantum operator is a Hamiltonian, and wherein the method further comprises determining, on the classical computer, the estimated ground state energy, wherein the estimated ground state energy is the minimum estimated expectation value of the Hamiltonian operator.

7. The method of claim 1 or claim 2, wherein using at least one of the one or more estimators to calculate the estimated expectation value associated with the state $|\Psi(\phi,\theta)\rangle$ comprises:

calculating, on the classical computer, coefficients $\dfrac{\partial^n c_i'(\phi)}{\partial \phi_m^n}$, wherein $H = \sum_i c_i'(\phi) U_1(\phi) P_i U_1^\dagger(\phi)$ ;

and,
calculating, on the classical computer, an estimated expectation value
$\dfrac{\partial^n E(\phi,\theta)}{\partial \phi_m^n} = \sum_i \dfrac{\partial^n c_i'(\phi)}{\partial \phi_m^n} \langle \Psi(0,\theta)|P_i|\Psi(0,\theta)\rangle$ associated with the state $|\Psi(\phi,\theta)\rangle$.

8. A method of calculating a reduction in activation energy in catalyst development, comprising:

determining one or more estimated expectation values using the method of any preceding claim, wherein the quantum operator is a chemical Hamiltonian of a molecular system; and,
using the one or more determined energy values to identify one or more points on a potential energy surface of the molecular system.

9. A method of simulating protein-molecule interaction, comprising:

determining one or more estimated expectation values using the method of any of claims 1 to 7, wherein the quantum operator is a chemical Hamiltonian of a molecular system; and,
using the one or more determined energy values to identify one or more points on a potential energy surface of the molecular system.

10. The method of any of claims 1 to 7 used in one or more of catalyst development, drug discovery or materials development.

11. A quantum computing system comprising:

a classical computer comprising a classical processor and classical memory; and,
a quantum computer comprising a quantum processor;
wherein the classical computer is configured to perform the steps performed by the classical computer in the method any of claims 1 to 7, and wherein the quantum computer is configured to perform the steps performed by the quantum computer in the method any of claims 1 to 7.

FIG. 1

100

# FIG. 2

# FIG. 3

300

301 Calculate form of $H_q$

302 Apply circuit $U_2(\theta)$ to prepare state $\Psi(0,\theta)$

303 Measure some number of $P_i$s

304a Calculate $c_i'(\phi^1)$

305a Obtain $\langle\Psi(\phi^1,\theta)|H_q|\Psi(\phi^1,\theta)\rangle$

304b Calculate $c_i'(\phi^2)$

305b Obtain $\langle\Psi(\phi^2,\theta)|H_q|\Psi(\phi^2,\theta)\rangle$

304k Calculate $c_i'(\phi^k)$

305k Obtain $\langle\Psi(\phi^k,\theta)|H_q|\Psi(\phi^k,\theta)\rangle$

# FIG. 4

# FIG. 5

$q_1$

$q_2$

302    $q_3$    $U_2(\theta)$

$\vdots$

$q_N$

FIG. 6

600

Determine form of ansatz state
$|\Psi(\phi,\theta)\rangle = U_1(\phi)U_2(\theta)|\psi_0\rangle.$

601

Obtain estimates of energy
expectation values $E(\phi^i,\theta^j) =$
$\langle\Psi(\phi^i,\theta^j)|H_q|\Psi(\phi^i,\theta^j)\rangle.$

602

Select lowest value of $E(\phi^i,\theta^j)$ as
estimate of ground state energy.

603

Europäisches
Patentamt

European
Patent Office

Office européen
des brevets

## EUROPEAN SEARCH REPORT

Application Number

EP 19 20 9830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREW ZHAO ET AL: "Measurement reduction in variational quantum algorithms", ARXIV.ORG, CORNELL UNIVERSITY LIBRARY, 201 OLIN LIBRARY CORNELL UNIVERSITY ITHACA, NY 14853, 21 August 2019 (2019-08-21), XP081467397, * Abstract; equations (1)-(6) and (46); Sections I, II, IV * | 1-11 | INV. G06N10/00 G06N5/00 |
| A | OPHELIA CRAWFORD ET AL: "Efficient quantum measurement of Pauli operators", ARXIV.ORG, CORNELL UNIVERSITY LIBRARY, 201 OLIN LIBRARY CORNELL UNIVERSITY ITHACA, NY 14853, 19 August 2019 (2019-08-19), XP081465363, * Sections I and IV * | 1-11 | |
| A | WILLIAM J HUGGINS ET AL: "Efficient and Noise Resilient Measurements for Quantum Chemistry on Near-Term Quantum Computers", ARXIV.ORG, CORNELL UNIVERSITY LIBRARY, 201 OLIN LIBRARY CORNELL UNIVERSITY ITHACA, NY 14853, 30 July 2019 (2019-07-30), XP081451982, * Sections I and II * | 1-11 | TECHNICAL FIELDS SEARCHED (IPC)  G06N |
| A | TZU-CHING YEN ET AL: "Measuring all compatible operators in one series of a single-qubit measurements using unitary transformations", ARXIV.ORG, CORNELL UNIVERSITY LIBRARY, 201 OLIN LIBRARY CORNELL UNIVERSITY ITHACA, NY 14853, 22 July 2019 (2019-07-22), XP081464080, * Sections I and II; figure 1 * | 1-11 | |

The present search report has been drawn up for all claims

| Place of search | Date of completion of the search | Examiner |
|---|---|---|
| The Hague | 12 May 2020 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A PERUZZO et al.** A variational eigenvalue solver on a photonic quantum processor. *Nat Commun,* 2014, vol. 5, 4213
- **M A NIELSEN ; I L CHUANG.** Quantum Computation and Quantum Information. 2010
- **P JORDAN ; E WIGNER.** *Z Physik,* 1928, vol. 47, 631
- **S BRAVYI ; J M GAMBETTA ; A MEZZACAPO ; K TEMME.** *Tapering off qubits to simulate fermionic Hamiltonians,* 2017

- **ROMERO et al.** Strategies for quantum computing molecular energies using the unitary coupled cluster ansatz. *Quantum Science and Technology,* 2018, vol. 4 (1), 014008
- **H F TROTTER.** On the product of semi-groups of operators. *Proc. Amer. Math. Soc.,* 1959, vol. 10, 545-551
- **KIVLICHAN et al.** Quantum simulation of electronic structure with linear depth and connectivity. *Phys. Rev. Lett.,* March 2018, vol. 120, 110501